# EUROPEAN PATENT SPECIFICATION

(11) **EP 3 819 079 B1**
(45) Date of publication and mention of the grant of the patent: **09.10.2024**
(21) Application number: 19852372.2
(22) Date of filing: 28.06.2019
(51) Int. Cl.: B23Q 11/08

(54) **SHUTTER DEVICE AND MACHINE TOOL**
VERSCHLUSSVORRICHTUNG UND WERKZEUGMASCHINE
DISPOSITIF D'OBTURATION ET MACHINE-OUTIL

(30) Priority: 24.08.2018 JP 2018157796
(43) Date of publication of application: 12.05.2021
(73) Proprietor: Star Micronics Co., Ltd., Shizuoka-shi, Shizuoka 422-8654 (JP)
(72) Inventor: ODA, Junya, Shizuoka-shi, Shizuoka 422-8654 (JP)
(74) Representative: Manitz Finsterwald Patent- und Rechtsanwaltspartnerschaft mbB
(86) International application number: PCT/JP2019/025802
(87) International publication number: WO 2020/039744

(56) References cited:
- EP-A1- 2 708 318
- JP-A- 2003 211 340
- JP-A- 2003 211 340
- JP-A- 2006 297 510
- JP-A- 2013 103 313
- JP-A- H1 058 276
- JP-A- H1 058 276
- JP-A- H1 080 838
- JP-A- H1 110 479
- US-A- 3 751 120

## Description

### TECHNICAL FIELD

The present invention relates to a shutter device and a machine tool.

### BACKGROUD ART

Patent Document 1, on which the preamble of claims 1, 2 is based, discloses a machine tool provided with a dustproof cover device capable of closing a vertical opening of a machine frame where a moving unit travels. The dustproof cover device comprises a base cover secured to the moving unit, an end cover arranged furthest from the moving unit to close an end of the vertical opening, and five intermediate covers arranged therebetween. The end cover and the intermediate covers are respectively formed in an L-shape of a guide and a cover. The guide is above the moving unit and extends in a moving direction. The cover is perpendicular to the guide and spreads over the vertical opening. The base cover, the end cover, and the intermediate covers overlap each other in a slidable manner. JP 2003 211340 A and US 3 751 120 A disclose further prior art.

### PRIOR ART DOCUMENT

### PATENT DOCUMENT

Patent Document 1: Japanese Patent Application Publication No.H10-58276

### TECHNICAL PROBLEM

The conventional L-shape intermediate covers are respectively formed thinner than the base cover and other covers. Such thinner cover has a low resistance to external force caused by chips, lubricant, and dusts caught in a gap between the intermediate covers. That possibly causes deformation of and damage to the intermediate covers.

The present invention discloses a shutter device and a machine tool capable of preventing deformation and damage of a component.

### TECHNICAL SOLUTION

The problem is solved by a shutter device according to claim 1 and a shutter device according to claims 2.

According to the structure described above, the plurality of shutter plates of the second shutter respectively has the coupling unit provided in the second plate. The shutter plates coupled by the coupling unit have an improved resistance. Deformation of the shutter plate and damage thereto is thereby prevented.

A machine tool provided with a shutter device of the invention can be regarded as an invention.

### BRIEF DESCRIPTION OF THE DRAWINGS

FIG. 1 is a perspective view of a tool post as simply illustrated.
FIG. 2 shows part of a lathe as seen from front.
FIG. 3 is a sectional view taken along A-A line of FIG. 2 showing a state that a second shutter expands.
FIG. 4 is a sectional view taken along A-A line of FIG. 2 showing a state that the second shutter contracts.
FIG. 5 is a sectional view taken along B-B line of FIG. 2 showing a state that the second shutter expands.
FIG. 6 is a sectional view taken along B-B line of FIG. 2 showing a state that the second shutter contracts.
FIG. 7 is a perspective view showing the end portions of second plates of overlapping two shutter plates.
FIG. 8 is a perspective view taken along C-C line of FIG. 2.
FIG. 9 is a perspective view taken along D-D line of FIG. 2.
FIG. 10 is a drawing for explaining an example of a problem.
FIG. 11 shows another example of a coupling unit.
FIG. 12 shows another example of a coupling unit.

### MODE FOR INVENTION

Hereinafter, an embodiment of the present invention will be described with reference to the drawings. The drawings only schematically show an example of the invention. They may have a mismatch in shape or proportion and an omission of illustration. Such mismatch and omission if any does not affect the explanation.

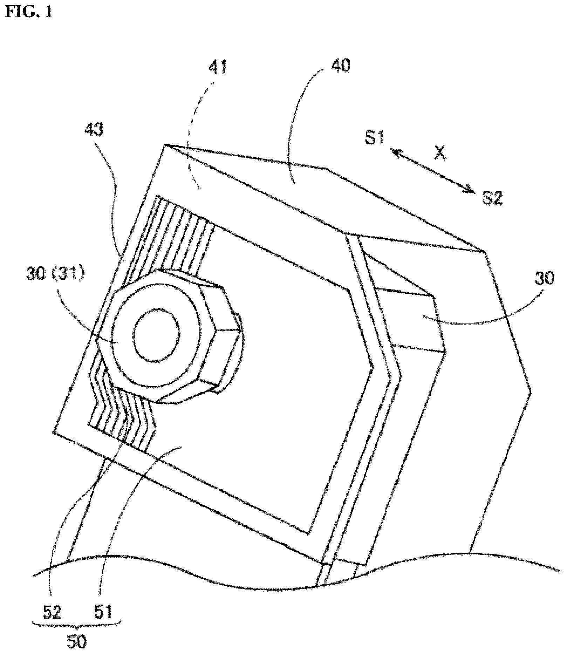

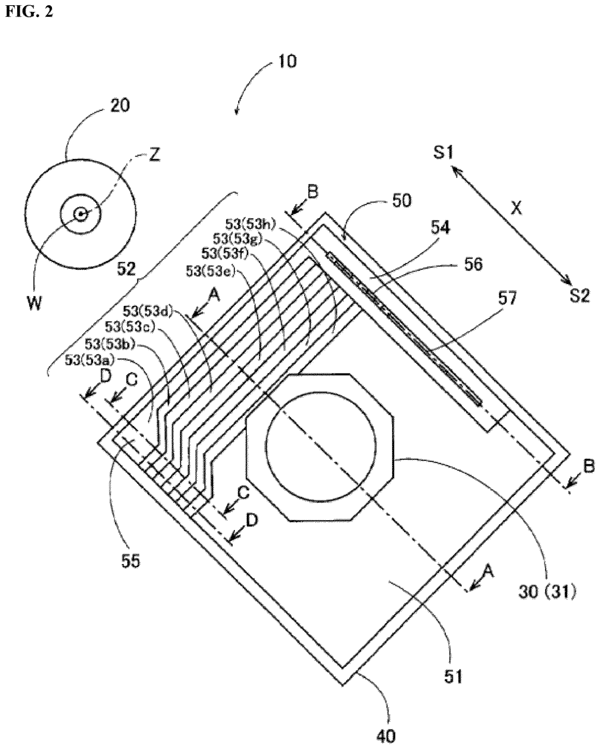

FIG. 1 simply shows a tool post 30 of the embodiment in a perspective view. FIG. 2 shows part of a lathe 10 provided with the tool post 30 as seen from front. The lathe 10 is an example of the machine tool. Each unit of the lathe 10 such as a spindle 20 and the tool post 30 may be numerically controlled by a not-shown NC (numerical control) apparatus to machine a workpiece W.

The spindle 20 holding the bar workpiece W may be rotated on a Z-axis. A tool (not shown) may be attached to the tool post 30. The tool post 30 may have a rotating apparatus called a turret 31 having a plurality of surfaces where a plurality of tools are attached. The turret 31 may be rotated to switch the tools for use in machining the workpiece W.

The spindle 20 may be arranged on an S1 side in an X-direction with respect to the tool post 30 as shown in FIG. 2. The X-direction may be perpendicular to the Z-axis. The tool post 30 may move in the X-direction, which may be an example of the predetermined direction. The tool post 30 may be an example of the moving unit. The X-direction may be oblique to the horizontal direction in FIG. 1 and FIG. 2. The S1 side in the X-direction may be upper while the other S2 side may be lower.

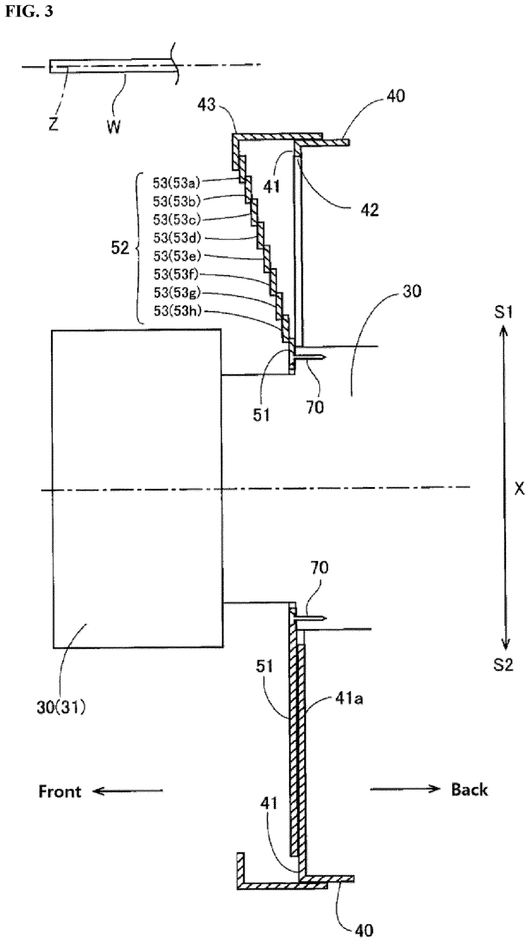

Part of the tool post 30 may be enclosed in a casing 40 as shown in FIG. 1. The casing 40 has a surface 41 parallel to the Z-axis where an opening (42 in FIG. 3) may be formed, through which the other part of the tool post 30 including the turret 31 may protrude outside the casing 40. The surface 41 may be regarded as a frame for the opening 42 if the opening 42 is formed in part of the surface 41. If the opening 42 is formed substantially entirely over the surface 41, the edges of the plurality of surfaces surrounding the surface 41 may be regarded as the frame for the opening 42.

The side that the tool post 30 protrudes outside the casing 40 may be called a front side for explanation. The direction parallel to the Z-axis may be called a front-back direction. A cover 43 may be attached in front of the surface 41 of the casing 40 to cover the edge of the surface 41 (FIG. 1). The cover 43 is not shown in FIG. 2, where the contours of the casing 40 as seen from fron is simply represented by a square. The cover 43 may be further in front than a shutter device 50 described later. In FIG. 1, the surfaces of the casing 40 except the surface 41 are not shown to make part of the tool post 30 enclosed in the casing 40 visible.

The tool post 30 may move or rotate the turret 31 under numerical control. The tool post 30 may move to the S1 side in the X-direction to approach the spindle 20. The tool post 30 may move to the S2 side in the X-direction to leave the spindle 20. When the tool post 30 moves in the X-direction, the casing 40 may remain stationary. The tool post 30 may be movable in a direction perpendicular to the X-direction and the Z-axis. The tool post 30 may be movable in the front-back direction together with the casing 40. The lathe 10 may include another spindle, another tool post, and a guide bush as required in addition to the configuration shown in FIG. 2.

The shutter device 50 may have a structure covering the opening 42. The shutter device 50 may thereby close the casing 40 to prevent invasion of chips scattered from the workpiece W, lubricant applied to the workpiece W, and other dusts (collectively called the chips) into the casing 40. The shutter device 50 may cover the whole of the opening 42 (except the area occupied by the tool post 30 passing the opening 42). The shutter device 50 may cooperate with another component to cover the opening 42. The shutter device 50 may cover a portion of the opening 42 with the other portion remained uncovered.

The shutter device 50 may comprise a first shutter 51 and a second shutter 52. The first shuter 51 may be a plate covering a certain portion of the opening 42, which may be an area around the tool post 30 and an area on the S2 side. The first shutter 51 may be directly or indirectly secured to the tool post 30.

The second shutter 52 may be arranged between the first shutter 51 and an end of the opening 42 on the S1 side. The second shutter 52 may expand and contract in the X-direction as the tool post 30 moves. The second shutter 52 may comprise a plurality of shutter plates 53 overlapping each other. The shutter plate 53 may have a first plate 54 and a second plate 55. The first plate 54 may be longitudinally extended in the X-direction. The second plate 55 may be longitudinally extended in a direction perpendicular to the first plate 54. The overlapping direction of the shutter plates 53 may be the front-back direction. The shutter plate 53 may be an L-shape plate consisting of the first plate 54 and the second plate 55. The longitudinal direction of the first plate 54 may be generally parallel to the X-direction. The direction may include a direction with an incline within an error range. The longitudinal direction of the second plate 55 may be generally perpendicular to the X-direction. The direction may include a direction with an incline within an error range.

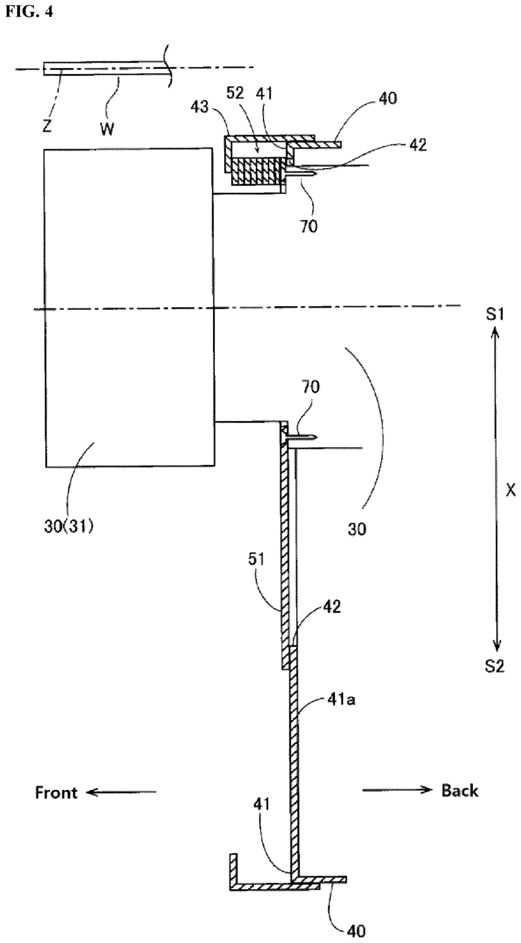

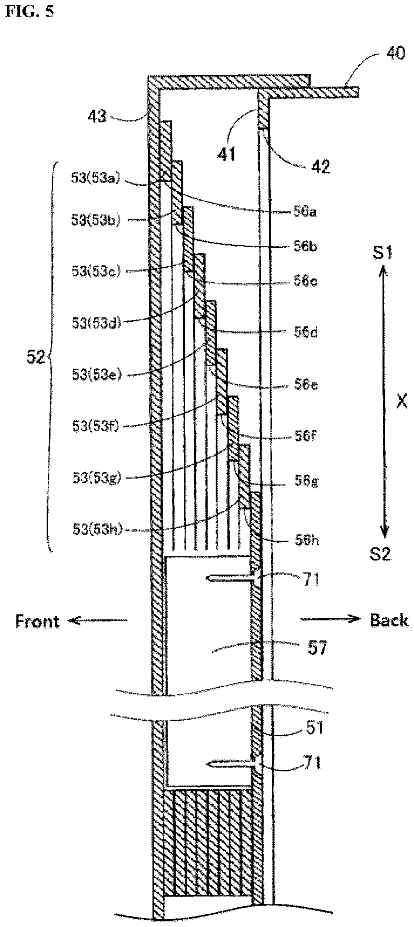

FIG. 3 and FIG. 4 each shows a sectional view taken along A-A line of FIG. 2. The tool post 30 and others are easy-to-view without hatching. The cover 43 (not shown in FIG. 2) is shown in FIG. 3 and FIG. 4, and further in FIG. 5, 6, 8, and 9. FIG. 3 shows the state that the second shutter 52 expands or the state that the tool post 30 is in a position on the S2 side. FIG. 4 shows the state that the second shutter 52 contracts or the state that the tool post 30 is in a position on the S1 side. The first shutter 51 may be secured to the tool post 30 with a screw 70. The first shutter 51 may move in the X-direction in conjunction with movement of the tool post 30 in the X-direction.

The second shutter 52 may include eight shutter plates 53. The number of shutter plates 53 may be more than eight or less than eight. The shutter plate 53 closest to the S1 side is denoted by 53a and the other plates are respectively denoted by 53b, 53c, 53d, 53e, 53f, 53g, and 53h in that order. As shown in FIG. 3, the shutter plate 53a closest to the S1 side may be in a frontmost position while the shutter plate 53h furthest from the S1 side may be in a backmost position. The first shutter 51 may be arranged at the back of the shutter plate 53h in the backmost position.

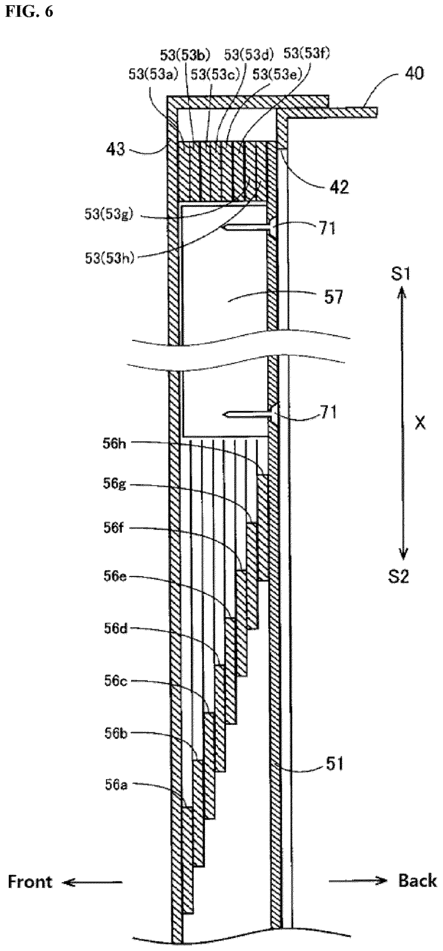

The first plate 54 of the shutter plate 53 may have a force receiving part 56 which receives an X-direction force from the first shutter 51. FIG. 5 and FIG. 6 each shows a sectional view taken along B-B line of FIG. 2 passing the first plate 54. FIG. 5 shows the state that the second shutter 52 expands. FIG. 6 shows the state that the second shutter 52 contracts. The tool post 30 is not shown.

As shown in FIG. 2, the first plate 54 of the shutter plate 53 may have a slit penetrating the first plate 54 in the front-back direction. The slit may be longitudinally extended in the X-direction. The slit may be an example of the force receiving part 56. The force receiving part 56 may be formed in the first plate 54 of every and each shutter plate 53. The force receiving parts 56 may be formed in positions overlapping each other. In FIG. 5 and FIG. 6, the force receiving part of the shutter plate 53a is denoted by 56a and the other force receiving parts are respectively denoted by 56b, 56c, 56d, 56e, 56f, 56g and 56h in that order.

The first shutter 51 may have a protrusion 57 in a position corresponding to the force receiving part 56 of the shutter plate 53. The protrusion 57 may protrude toward the overlapping shutter plates 53. The protrusion 57 protruding to the front may be inserted in the force receiving parts 56a, 56b, 56c, 56d, 56e, 56f, 56g, and 56h. The protrusion 57 may be longitudinal in the X-direction and fastened to the first shutter 51 with a screw 71 (FIG. 5 and FIG. 6). The protrusion 57 as caught in the force receiving parts 56a, 56b, 56c, 56d, 56e, 56f, 56g, and 56h may move in the X-direction integrally with the first shutter 51. The protrusion 57 may be an example of a first protrusion. In FIG. 5 and FIG. 6, the protrusion 57 and others are shown without hatching for easy-to see purpose.

The slits (the force receiving parts 56a, 56b, 56c, 56d, 56e, 56f, 56g, and 56h) may be different in length in the X-direction (FIG. 5 and FIG. 6). Particularly, the force receiving part 56 of the shutter plate 53 closer to the end of the opening 42 on the S1 side is longer in the X-direction. Specifically, the force receiving part 56a of the shutter plate 53a may be the longest while the force receiving part 56h of the shutter plate 53h may be the shortest.

When the tool post 30 with the first shutter 51 moves from the S2 side to the S1 side, the end of the protrusion 57 on the S1 side may sequentially hit the end of each force receving part 56 on the S1 side from 56h to 56a in that order. Each of the shutter plates 53 may receive pushing force toward the S1 side and thereby sequentially start to move toward the S1 side from 53h to 53a in that order. As the result, the shutter plates 53a to 53h may overlap each other in a position on the S1 side to bring the second shutter 52 into a contracted state as shown in FIG. 4 and FIG. 6. Finally, the second plates 55 of the shutter plates 53a, 53b, 53c, 53d, 53e, 53f, 53g, and 53h may almost entirely overlap each other when contration of the second shutter 52 is complete as shown in FIG. 4.

When the tool post 30 with the first shutter 51 moves from the S1 side to the S2 side, the end of the protrusion 57 on the S2 side may sequentially hit the end of each force receving part 56 on the S2 side from 56h to 56a in that order. Each of the shutter plates 53 may receive pushing force toward the S2 side and thereby sequentially start to move toward the S2 side from 53h to 53a in order. As the result, the second shutter 52 is brought into an expanded state.

As described above, the second shutter 52 may expand and contract in the X-direction when the first plate 54 of the shutter plates 53 of the second shutter 52 receives the X-direction force from the first shutter 51 through the force receiving part 56. Even in the state that expansion of the second shutter 52 is complete, part of the shutter plate 53 may still overlap part of the shutter plate 53 adjacent to in the front-back direction (FIG. 3, FIG. 5). A plate 41a as shown in FIG. 3 and FIG. 4 may be part of the surface 41 of the casing 40 where the opening 42 is not formed. The plate 41a may be in a position on the S2 side with respect to the tool post 30 to overlap at the back of the first shutter 51. Even when the tool post 30 with the first shutter 51 moves to the S1 side, part of the opening 42 on the S2 side of the tool post 30 can be prevented from exposure by the plate 41a provided behind the first shutter 51 (FIG. 4). The shutter device 50 of the invention keeps the opening 42 closed regardless of movement of the tool post 30 to whichever side in the X-direction.

The second plate 55 of the shutter plate 53 of the second shutter 52 may be provided with a coupling unit 58. The coupling unit 58 may couple the shutter plates 53 mutually overlapping in the front-back direction movably in the X-direction relative to each other.

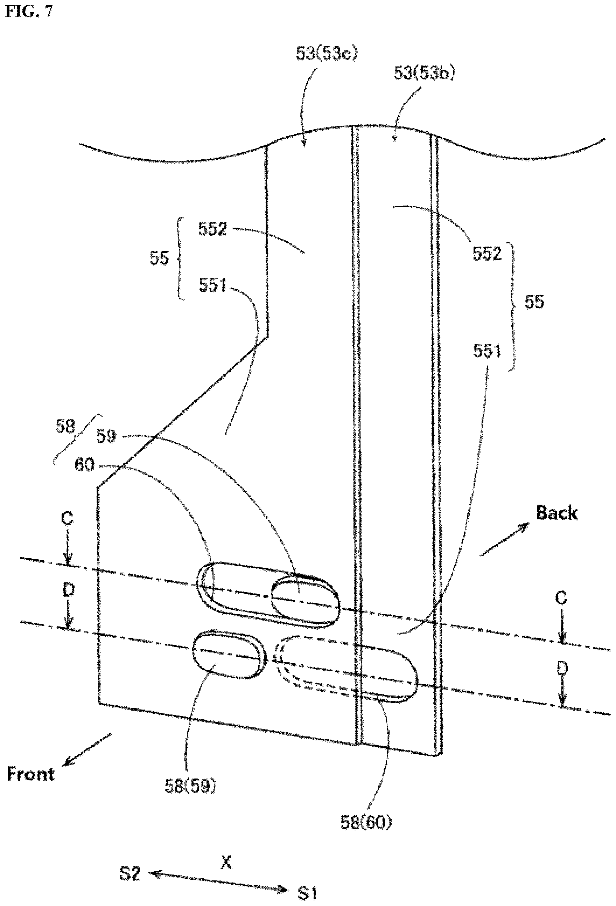

FIG. 7 is a perspective view showing end portions 551 of the second plates 55 of overlapping two shutter plates 53 as seen from the back. The end portion 551 of the second plate 55 may be opposite the other end portion of the second plate 55 to be connected to the first plate 54. The two shutter plates 53 in FIG. 7 may be the shutter plates 53b and 53c.

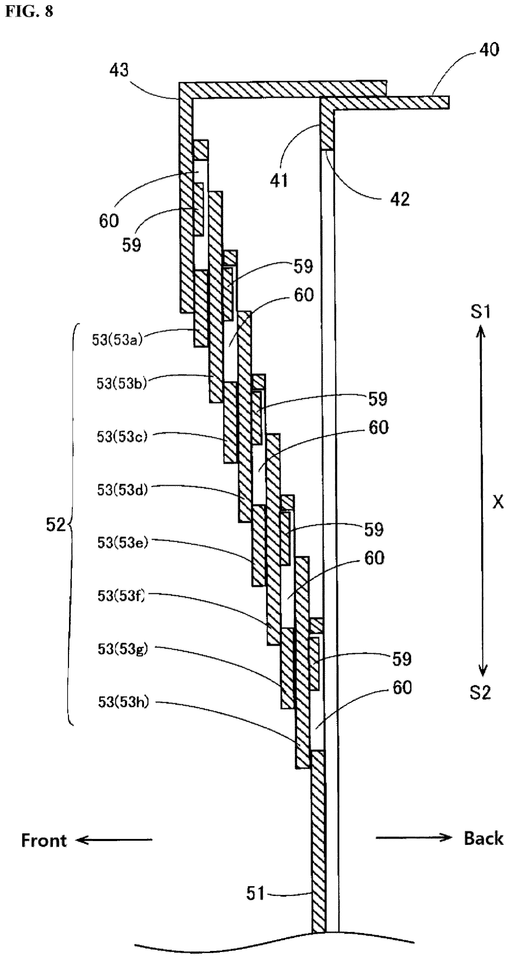

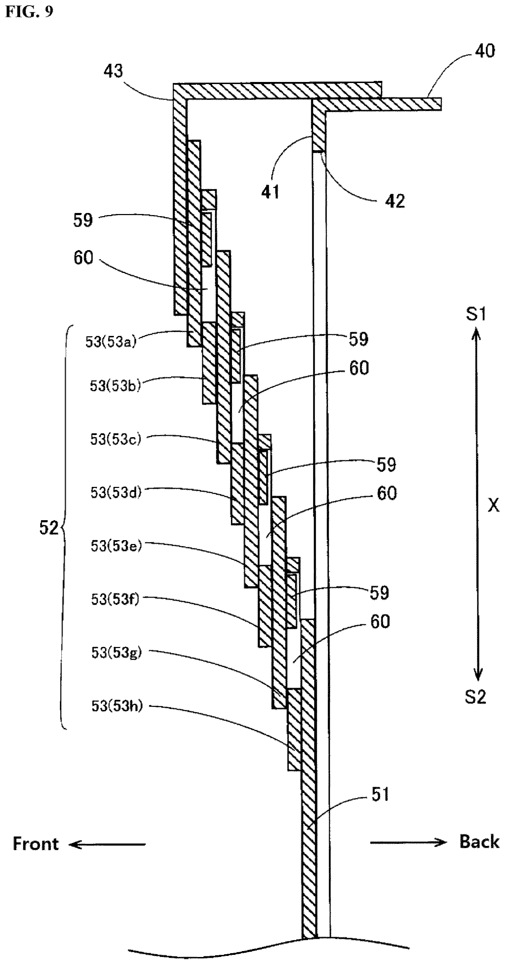

FIG. 8 is a perspective view taken along C-C line of FIG. 2, which passes the end portion 551 of the second plate 55 of the shutter plate 53. FIG. 9 is a perspective view taken along D-D line of FIG. 2, which passes the end portion 551 of the second plate 55 of the shutter plate 53. The C-C line and the D-D line are also shown in FIG. 7. They are deviated with respect to the longitudinal direction of the second plate 55 as shown in FIG. 2 and FIG. 7.

The end portion 551 of the shutter plate 53 may be provided with a protrusion 59 and a recess 60. The protrusion 59 may correspond to the second protrusion. A combination of the protrusion 59 and the recess 60 may be an embodiment of the coupling unit 58. The protrusion 59 formed in one shutter plate 53 may be inserted in the recess 60 formed in another shutter plate 53 overlapping at the back. The recess 60 formed in one shutter plate 53 may receive the protrusion 59 formed in another shutter plate 53 overlapping at the front as shown in FIG. 7, FIG. 8, and FIG. 9. There may be two types of the end portion 551 having different positional relationships of the protrusion 59 and the recess 60. The recess 60 may be in a predetermined position nearer the first plate 54 with respect to the longitudinal direction of the second plate 55 than the protrusion 59 may be (the end portion 551 of the first type). The protrusion 59 may be in a predetermined position nearer the first plate 54 with respect to the longitudinal direction of the second plate 55 than the recess 60 may be (the end portion 551 of the second type).

The plurality of shutter plates 53 may overlap each other in the front-back direction in such manner as the end portion 551 of the first type and the end portion 551 of the second type are alternately arranged. In FIG. 7, the shutter plate 53b at the front may have the end portion 551 of the second type while the shutter plate 53c at the back may have the end portion 551 of the first type. In FIG. 8 and FIG. 9, the shutter plates 53a, 53c, 53e, and 53g respectively may have the end portion 551 of the first type while the shutter plates 53b, 53d, 53f, and 53h respectively may have the end portion 551 of the second type. Accordingly, the protrusion 59 of the end portion 551 of the first type may be inserted in the recess 60 of the end portion 551 of the second type of the shutter plate 53 overlapping at the back. Then, the protrusion 59 of the end portion 551 of the second type may be inserted in the recess 60 of the end portion 551 of the first type of the shutter plate 53 overlapping on the further back side. Such engagement may be sequentially repeated for the plurality of shutter plates 53 overlapping in the front-back direction.

The recess 60 in FIG. 7 to FIG. 9 may be a through-hole penetrating the shutter plate 53 in the front-back direction. Thickness of the protrusion 59 in the front-back direction (a degree of protrusion) may be less than the depth of the recess 60 in the front-back direction. Thickness of the shutter plate 53 may equal to the depth of the recess 60 in FIG. 7 to FIG. 9 where the recess 60 is a through-hole. The recess 60 may not be a through-hole. The recess 60 may be a hollow only capable of receiving the protrusion 59 of the overlapping shutter plate 53.

A combination of the protrusion 59 protruding from one shutter plate 53 toward the other overlapping shutter plate 53 and the recess 60 formed in the other shutter plate 53 to receive the protrusion 59 may correspond to the coupling unit 58 coupling the two shutter plates 53. In FIG. 7, the recess 60 may be an elongated hole extended in the X-direction. The overlapping two shutter plates 53 can move in the range of the length of the recess 60 (the elongated hole) in the X-direction relative to each other.

The coupling structure by the coupling unit 58 may be applied to the relation between the cover 43 and the frontmost shutter plate 53a and to the relation between the backmost shutter plate 53h and the first shutter 51. The cover 43 facing the end portion 551 of the second plate 55 of the shutter plate 53a may be provided with the protrusion 59 protruding toward the back (FIG. 8). The protrusion 59 of the cover 43 may be inserted in the recess 60 of the shutter plate 53a. The first shutter 51 facing the end portion 551 of the second plate 55 of the shutter plate 53h may be provided with the recess 60. The recess 60 of the first shutter 51 may receive the protrusion 59 protruding from the shutter plate 53h toward the back. Accordingly, the cover 43 secured to the casing 40, the plurality of shutter plates 53, and the first shutter 51 moving in the X-direction in conjunction with movement of the tool post 30 may be continuously coupled by the coupling units 58 provided between the mutually overlapping members.

The protrusion 59 may protrude to whichever direction. It may protrude to the front side instead of the back side. The protrusion 59 of the shutter plate 53 protruding forwards may be inserted in the recess 60 of the other shutter plate 53 overlapping at the front. The recess 60 of the shutter plate 53 may receive the protrusion 59 of the shutter plate 53 overlapping at the back.

The structure of the coupling unit 58 may have variations. There may be the shutter plate 53 provided with two protrusions 59, one protruding forwards and the other protruding backwards. There may be the other shutter plate 53 provided with two recesses 60 overlapping the shutter plate 53 having the two protrusions 59. Particularly, there may be the end portion 551 of the third type having the protrusion 59 protruding forwards and the protrusion 59 protruding backwards. The backward protrusion 59 may be in a predetermined position deviated with respect to the forward protrusion 59 in the longitudinal direction of the second plate 55. There may be further the end portion 551 of the fourth type having the recess 60 opened at least forwards and the recess 60 opened at least backwards. The backward recess 60 may be in a predetermined position deviated with respect to the forward recess 60 in the longitudinal direction of the second plate 55. The plurality of shutter plates 53 may overlap each other in the front-back direction in such manner as the end portion 551 of the third type and the end portion 551 of the fourth type are alternately arranged. Accordingly, the backward protrusion 59 of the end portion 551 of the third type may be inserted in one of the recesses 60 of the end portion 551 of the fourth type of the shutter plate 53 overlapping at the back. Then, the other of the recesses 60 of the end portion 551 of the fourth type may receive the forward protrusion 59 of the end portion 551 of the third type of the shutter plate 53 overlapping on the further back side. Such engagement may be sequentially repeated for the plurality of shutter plates 53 overlapping in the front-back direction.

The width of the end portion 551 in the X-direction may be different from that of a longitudinal portion 552 of the second plate 55 (a portion nearer the first plate 54 than the end portion 551) as shown in FIG. 2 and FIG. 7. The longitudinal portion 552 may be narrower than the end portion 551 in the X-direction. The end portion 551 may necessarily have enough width in the X-direction for the protrusion 59 and the recess 60 serving as the coupling unit 58. The longitudinal portion 552 without the coupling unit 58 may be formed in a narrower shape.

According to the embodiment, the shutter device 50 may move in conjunction with movement of the tool post 30 in the predetermined X-direction to close part of the opening 42. The shutter device 50 may comprise the first shutter 51 moving in the X-direction in conjunction with movement of the tool post 30 and the second shutter 52 arranged between the end of the opening 42 and the first shutter 51. The second shutter 52 may expand and contract in the X-direction in conjunction with movement of the tool post 30. The second shutter 52 may have the plurality of shutter plates 53. The shutter plate 53 may have the first plate 54 longitudinally extended in the X-direction and the second plate 55 longitudinally extended in a direction perpendicular to the first plate 54. The second plate 55 of the shutter plate 53 may be provided with the coupling unit 58 which couples the overlapping shutter plates 53 in a manner that they can move in the predetermined direction relative to each other. The shutter plates 53 coupled by the coupling unit 58 formed in the second plate 55 may have improved resistance to deformation.

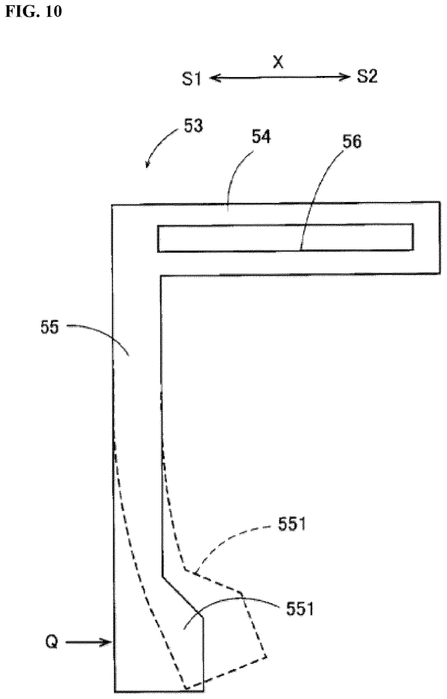

FIG. 10 shows one of the shutter plates 53 of the second shutter 52 for explanation of a problem to be solved by the embodiment of the invention. The shutter plate 53 may move in the X-direction as the tool post 30 moves in the X-direction. It is quite possible that smooth movement of the shutter plate 53 is hindered by unnecessary external force applied to the shutter plate 53 when chips are caught in a gap between the mutually overlapping shutter plates 53. It is being assumed that the chips enter the gap between the end portions 551 of the two overlapping shutter plates 53. When the shutter plate 53 overlapping at the back starts to move toward the S1 side as the tool post 30 starts to move to the S1 side in the X-direction, the second plate 55 of the shutter plate 53 starting to move may receive the force Q (FIG. 10) due to invasion of the chips. It is quite possible that the second plate 55 of the shutter plate 53 receiving the force Q is deformed toward the S2 side as shown by a broken line.

Deformation of the second plate 55 applies great load to a root thereof, which is a place connecting the second plate 55 and the first plate 54. Applied load possibly causes a crack in the root and damage to the shutter plate 53. In the embodiment, however, the shutter plates 53 can be mutually supported by each other by the coupling unit 58 formed in the second plate 55 to improve resistance to unnecessary external force. Deformation of the shutter plate 53 and damage thereto caused by deformation is thereby prevented.

The coupling unit 58 may be formed in the end portion 551 opposite the root connecting the second plate 55 and the first plate 54. The force Q applied to the end portion 551 of the second plate 55 distant from the root thereof would increase load applied to the root and thereby easily cause damage to the shutter plate 53. The coupling unit 58 formed in the end portion 551 could prevent deformation of the shutter plate 53 against external force generated due to invasion of chips into the end portion 551. Damage to the shutter plate 53 could be thereby prevented.

The coupling unit 58 may, however, be formed in another place of the second plate 55. For example, the coupling unit 58 may be provided in both the end portion 551 and the longitudinal portion 552 respectively or only in the longitudinal portion 552.

The longitudinal portion 552 of the second plate 55 of the shutter plate 53 may be of a shape narrower than the end portion 551 in width in the X-direction. Such configuration could bring the tool post 30 closest to the end of the opening 42 to be in a position closest to the spindle 20 on the S1 side when contraction of the second shutter 52 is complete.

At least part of the longitudinal portion 552 may be the same as the end portion 551 in width in the X-direction or wider than the end portion 551.

In the embodiment, the coupling unit 58 may comprise the second protrusion (the protrusion 59) protruding from one shutter plate 53 toward the other shutter plate 53 overlapping each other and a hole (the recess 60), whose width in the X-direction is longer than the protrusion 59, formed in the other shutter plate 53 to receive the protrusion 59. The adjacent shutter plates 53 may be coupled by engagement of the protrusion 59 formed in one shutter plate 53 and the recess 60 formed in the other shutter plate 53. The recess 60 may be elongated in the X-direction (FIG. 7), which shortens the recess 60 in width in the longitudinal direction of the second plate 55. Such configuration could shorten the end portion 551 in width in the longitudinal direction of the second plate 55 while the end portion 551 may have the protrusion 59 and the recess 60 deviated to each other with respect to the longitudinal direction of the second plate 55.

The shape of the coupling unit 58 may not be limited to the protrusion 59 and the recess 60 as described above. The coupling unit 58 may be any device capable of coupling the adjacent overlapping shutter plates 53 in a manner that they are relatively movable in the X-direction.

The first plate 54 of the shutter plate 53 may have the force receiving part 56 which receives the X-direction force from the first shutter 51. The shutter plates 53 of the second shutter 52 may receive the X-direction force from the first shutter 51 through the force receiving part 56 formed in the first plate 54. The second shutter 52 may thereby expand and contract.

The first shutter 51 may be provided with the first protrusion (the protrusion 57) protruding toward the overlapping shutter plates. The force receiving part 56 formed in the first plate 54 of the shutter plate 53 may be a slit penetrating through the first plate 54 and elongated in the X-direction to receive the protrusion 57. The slit of the shutter plate 53 may be longer in the X-direction as the shutter plate 53 is closer to the end of the opening 42. The protrusion 57 may move inside the slit (the force receiving part 56) of the shutter plate 53 in conjunction with movement of the first shutter 51. The shutter plates 53 may consecutively move in the X-direction in order, resulting in expansion and contraction of the second shutter 52.

Both the slit (the force receiving part 56) and the protrusion 57 inserted in the slit may be of an elongated shape in the X-direction. When the protrusion 57 move inside the slit in the X-direction, the X-direction force from the first shutter 51 moving in the X-direction may be appropriately conveyed to each shutter plate 53 of the second shutter 52. The shutter plate 53 is thereby restricted to move in a direction perpendicular to the X-direction. The shutter plate 53 can smoothly move without an inclination with respect to the X-direction or with little inclination if any.

The force receiving part 56 may be provided in the second plate 55 of the shutter plate 53. For example, the force receiving part 56 may be formed in the longitudinal portion 552 of the second plate 55 of the shutter plate 53h in the furthest position on the S2 side. The force receiving part 56 formed in the second plate 55 may receive force toward the S1 side or the S2 side from the first shutter 51. The second shutter 52 may expand and contract accordingly.

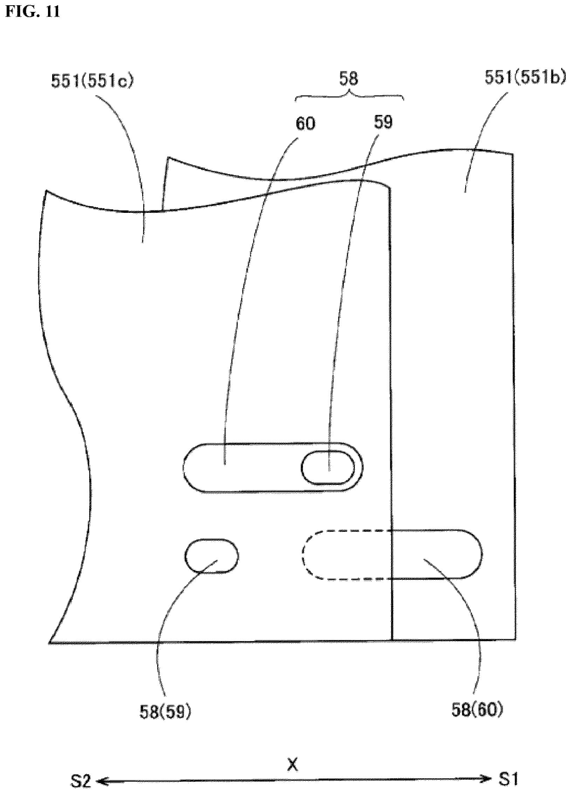

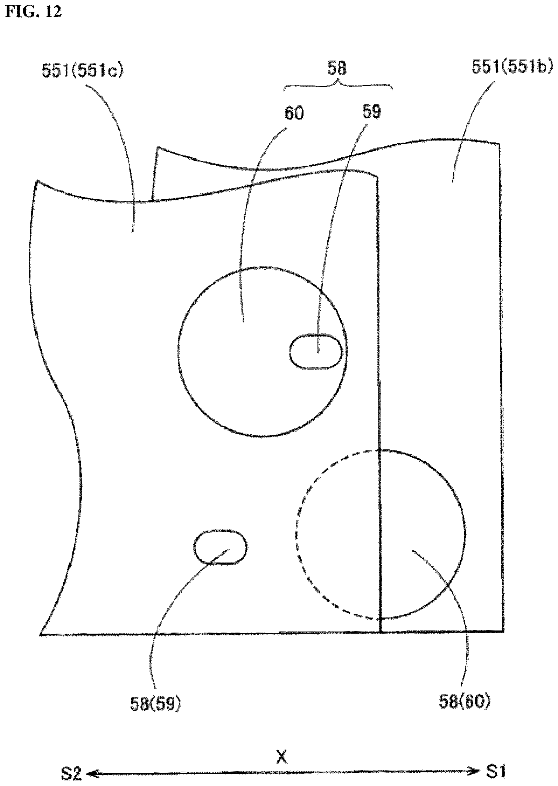

FIG. 11 and FIG. 12 respectively show another embodiment of the coupling unit 58. The drawing shows a rear view of part of the end portions 551 of the second plates 55 of the shutter plates 53 overlapping in the front-back direction. The protrusion 59 and the recess 60 may be formed in an end portion 551b of the shutter plate 53b. The protrusion 59 and the recess 60 may be also formed in an end portion 551c of the shutter plate 53c. The protrusion 59 of the end portion 551b may be inserted in the recess 60 of the end portion 551c.

The protrusion 59 in FIG. 11 may be smaller than that in FIG. 7. The protrusion 59 in FIG. 11 may be of such size as not touching an edge of the recess 60 when the second shutter 52 normally moves in conjunction with movement of the tool post 30 with the first shutter 51. Normal movement of the second shutter 52 may mean that each shutter plate 53 can move in the X-direction without deformation possibly caused by the force Q as described above or other unnecessary external force. The protrusion 59 may move within the recess 60 in the X-direction by engagement of the protrusion 57 of the first shutter 51 with the force receiving part 56. The protrusion 59 may be of such size as not touching the edge of the recess 60 when the second shutter 52 normally moves. That prevents constant occurrence of friction between the protrusion 59 and the recess 60 during movement of the second shutter 52. When the second shutter starts to move, the shutter plate 53 may start to deform due to the external force to bring the protrusion 59 in FIG. 11 into contact with the edge of the recess 60. Such engagement of the protrusion 59 and the recess 60 may bring the shutter plates 53 to be in a substantially coupled state by the coupling unit 58. The plurality of shutter plates 53 are thereby supported by each other, which prevents deformation of the shutter plate due to the external force.

The coupling unit 58 in the embodiment may include a structure always keeping engagement of the shutter plates and further include another structure bringing the engagement only in an abnormal condition caused by, for example, unnecessary external force.

The recess 60 may be an elongated hole longer than the protrusion 59 in length in the X-direction. The recess 60 may not be limited to the hole elongated in the X-direction as in FIG. 7 and FIG. 11. The recess 60 may be a circular hole as in FIG. 12. The protrusion 59 may be still of a size as not touching the edge of the recess 60 during normal movement of the second shutter 52.

The X-direction along which the tool post 30 moves may be horizontally inclined. The side S1 closer to the spindle 20 may be upper while the side S2 further from the spindle 20 may be lower. Accordingly, it is quite possible that accumulation of chips is heavier on a surface of the shutter device 50 on the S2 side because of gravity than on a surface thereof on the S1 side. In this embodiment, the surface on the S2 side of the shutter device 50 may be formed of the first shutter 51 of a single plate while the surface on the S1 side may be formed of the plurality of L-shape shutter plates 53. Such configuration can reduce accumulation of chips on the shutter device 50 compared to a structure that a plurality of overlapping plates forms the surface on the S2 side. Further in this embodiment, the plurality of shutter plates 53 may overlap each other in a manner that the shutter plate 53 on the S1 side is at the front while the shutter plate 53 on the S2 side is at the back. Such configuration can prevent invasion of chips into between the shutter plates compared to a structure that the shutter plates 53 may overlap each other in a manner that the shutter plate 53 on the S1 side is at the back while the shutter plate 53 on the S2 side is at the front.

The machine tool provided with the shutter device of the invention may not be limited to a lathe. The shutter device may be mounted in an industrial machine besides the machine tool. The shutter device may be useful to close an opening, for example, through which a robot arm (a moving unit) protrudes. The shutter device 50 may be widely useful to prevent invasion of dusts into an opening through which a moving unit protrudes outwards.

### DESCRPTION OF SYMBOLS

- 10: lathe
- 20: spindle
- 30: tool post
- 31: turret
- 40: casing
- 41: surface
- 42: opening
- 43: cover
- 50: shutter device
- 51: first shutter
- 52: second shutter
- 53: shutter plate
- 54: first plate
- 55: second plate
- 56: force receiving part
- 57: protrusion
- 58: coupling unit
- 59: protrusion
- 60: recess
- 551: end portion
- 552: longitudinal portion
- W: workpiece

## Claims

1. A shutter device (50) which moves in conjunction with movement of a moving unit in a predetermined direction comprising:
a first shutter (51) which moves in the predetermined direction in conjuction with movement of the moving unit to cover part of an opening (42); and
a second shutter (52) arranged between an end of the opening (42) and the first shutter (51) to expand and contract in the predetermined direction in conjunction with movement of the moving unit,
wherein the second shutter (52) comprises a plurality of shutter plates (53) overlapping each other, each of which having a first plate (54) whose longitudinal direction is along the predetermined direction and a second plate (55) whose longitudinal direction is along a perpendicular direction to the first plate (54),
the first plate (54) of the shutter plates (53) of the second shutter (52) is provided with a force receiving part (56) which receives a force toward the predetermined direction from the first shutter (51),
the shutter device (50) being **characterised in that**
the second plate (55) of the shutter plates (53) of the second shutter (52) is provided with a coupling unit (58) which couples the overlapping shutter plates (53) in a manner that they can move in the predetermined direction relative to each other,
the first shutter (51) is provided with a first protrusion (57) protruding toward the overlapping shutter plates (53),
the force receiving part (56) is a slit elongated in the predetermined direction and penetrating the first plate (54) to receive the first protrusion (57), and
each slit is longer in the predetermined direction as the shutter plate (53) is closer to the end of the opening (42).

2. A shutter device (50) which moves in conjunction with movement of a moving unit in a predetermined direction comprising:
a first shutter (51) which moves in the predetermined direction in conjuction with movement of the moving unit to cover part of an opening (42); and
a second shutter (52) arranged between an end of the opening (42) and the first shutter (51) to expand and contract in the predetermined direction in conjunction with movement of the moving unit,
wherein the second shutter (52) comprises a plurality of shutter plates (53) overlapping each other, each of which having a first plate (54) whose longitudinal direction is along the predetermined direction and a second plate (55) whose longitudinal direction is along a perpendicular direction to the first plate (54),
the shutter device (50) being **characterised in that**
the second plate (55) of the shutter plates (53) of the second shutter (52) is provided with a coupling unit (58) which couples the overlapping shutter plates (53) in a manner that they can move in the predetermined direction relative to each other,
wherein the coupling unit (58) is formed in an end portion (551) of the second plate (55) opposite the other end portion thereof connected to the first plate (54).

3. The shutter device (50) of claim 2, wherein the other end portion of the second plate (55) is narrower than the end portion (551) where the coupling unit (58) is formed in width in the predetermined direction.

4. The shutter device (50) of any of claims 1 to 3, wherein the coupling unit (58) comprises a second protrusion (59) protruding from one of the overlapping shutter plates (53) to the other and a hole (60) formed in the other shutter plate (53) receiving the second protrusion (59), and the hole (60) is longer than the second protrusion (59) in width in the predetermined direction.

5. A machine tool provided with the shutter device (50) of any of claims 1 to 4.

## Patentansprüche

1. Verschlussvorrichtung (50), die sich in Verbindung mit einer Bewegung einer Bewegungseinheit in einer vorbestimmten Richtung bewegt, umfassend:
einen ersten Verschluss (51), der sich in der vorbestimmten Richtung in Verbindung mit einer Bewegung der Bewegungseinheit bewegt, um einen Teil einer Öffnung (42) zu bedecken; und
einen zweiten Verschluss (52), der zwischen einem Ende der Öffnung (42) und dem ersten Verschluss (51) angeordnet ist, um sich in der vorbestimmten Richtung in Verbindung mit einer Bewegung der Bewegungseinheit auszudehnen und zusammenzuziehen,
wobei der zweite Verschluss (52) eine Vielzahl von Verschlussplatten (53) umfasst, die einander überlappen, von denen jede eine erste Platte (54), deren Längsrichtung entlang der vorbestimmten Richtung verläuft, und eine zweite Platte (55), deren Längsrichtung entlang einer senkrechten Richtung zu der ersten Platte (54) verläuft, aufweist,
wobei die erste Platte (54) der Verschlussplatten (53) des zweiten Verschlusses (52) mit einem Kraftaufnahmeteil (56) versehen ist, das eine Kraft in Richtung der vorbestimmten Richtung von dem ersten Verschluss (51) aufnimmt,
wobei die Verschlussvorrichtung (50) **dadurch gekennzeichnet ist, dass** die zweite Platte (55) der Verschlussplatten (53) des zweiten Verschlusses (52) mit einer Kopplungseinheit (58) versehen ist, die die überlappenden Verschlussplatten (53) auf eine Weise koppelt, dass sie sich in der vorbestimmten Richtung relativ zueinander bewegen können,
der erste Verschluss (51) mit einem ersten Vorsprung (57) versehen ist, der in Richtung der überlappenden Verschlussplatten (53) vorsteht,
das Kraftaufnahmeteil (56) ein Schlitz ist, der in der vorbestimmten Richtung verlängert ist und die erste Platte (54) durchdringt, um den ersten Vorsprung (57) aufzunehmen, und
jeder Schlitz in der vorbestimmten Richtung länger ist, je näher die Verschlussplatte (53) an dem Ende der Öffnung (42) liegt.

2. Verschlussvorrichtung (50), die sich in Verbindung mit einer Bewegung einer Bewegungseinheit in einer vorbestimmten Richtung bewegt, umfassend:
einen ersten Verschluss (51), der sich in der vorbestimmten Richtung in Verbindung mit einer Bewegung der Bewegungseinheit bewegt, um einen Teil einer Öffnung (42) zu bedecken; und
einen zweiten Verschluss (52), der zwischen einem Ende der Öffnung (42) und dem ersten Verschluss (51) angeordnet ist, um sich in der vorbestimmten Richtung in Verbindung mit einer Bewegung der Bewegungseinheit auszudehnen und zusammenzuziehen,
wobei der zweite Verschluss (52) eine Vielzahl von Verschlussplatten (53) umfasst, die einander überlappen, von denen jede eine erste Platte (54), deren Längsrichtung entlang der vorbestimmten Richtung verläuft, und eine zweite Platte (55), deren Längsrichtung entlang einer senkrechten Richtung zu der ersten Platte (54) verläuft, aufweist,
wobei die Verschlussvorrichtung (50) **dadurch gekennzeichnet ist, dass** die zweite Platte (55) der Verschlussplatten (53) des zweiten Verschlusses (52) mit einer Kopplungseinheit (58) versehen ist, die die überlappenden Verschlussplatten (53) auf eine Weise koppelt, dass sie sich in der vorbestimmten Richtung relativ zueinander bewegen können,
wobei die Kopplungseinheit (58) in einem Endabschnitt (551) der zweiten Platte (55) gegenüber dem anderen Endabschnitt davon, der mit der ersten Platte (54) verbunden ist, ausgebildet ist.

3. Verschlussvorrichtung (50) nach Anspruch 2, wobei der andere Endabschnitt der zweiten Platte (55) schmaler als der Endabschnitt (551) ist, wo die Kopplungseinheit (58) in der Breite in der vorbestimmten Richtung ausgebildet ist.

4. Verschlussvorrichtung (50) nach einem der Ansprüche 1 bis 3, wobei die Kopplungseinheit (58) einen zweiten Vorsprung (59), der von einer der überlappenden Verschlussplatten (53) zu der anderen vorsteht, und ein Loch (60), das in der anderen Verschlussplatte (53) ausgebildet ist und den zweiten Vorsprung (59) aufnimmt, umfasst, und das Loch (60) in der Breite in der vorbestimmten Richtung länger als der zweite Vorsprung (59) ist.

5. Werkzeugmaschine, die mit der Verschlussvorrichtung (50) nach einem der Ansprüche 1 bis 4 versehen ist.

## Revendications

1. Dispositif d'obturation (50) qui se déplace conjointement avec un déplacement d'une unité mobile dans une direction prédéterminée, comprenant :
un premier obturateur (51) qui se déplace dans la direction prédéterminée conjointement avec un déplacement de l'unité mobile pour recouvrir une partie d'une ouverture (42) ; et
un second obturateur (52) agencé entre une extrémité de l'ouverture (42) et le premier obturateur (51) pour s'étendre et se contracter dans la direction prédéterminée conjointement avec un déplacement de l'unité mobile,
dans lequel le second obturateur (52) comprend une pluralité de plaques d'obturation (53) se chevauchant les unes les autres, chacune d'elles ayant une première plaque (54) dont une direction longitudinale est le long de la direction prédéterminée et une seconde plaque (55) dont une direction longitudinale est le long d'une direction perpendiculaire à la première plaque (54), la première plaque (54) des plaques d'obturation (53) du second obturateur (52) étant dotée d'une partie de réception de force (56) qui reçoit une force vers la direction prédéterminée depuis le premier obturateur (51),
le dispositif d'obturation (50) étant **caractérisé en ce que**
la seconde plaque (55) des plaques d'obturation (53) du second obturateur (52) est dotée d'une unité de couplage (58) qui couple les plaques d'obturation en chevauchement (53) de telle manière qu'elles peuvent se déplacer dans la direction prédéterminée les unes relativement aux autres,
le premier obturateur (51) est doté d'une première projection (57) en projection vers les plaques d'obturation en chevauchement (53),
la partie de réception de force (56) est une fente allongée dans la direction prédéterminée et pénétrant dans la première plaque (54) pour recevoir la première projection (57), et
chaque fente est plus longue dans la direction prédéterminée lorsque la plaque d'obturation (53) est plus proche de l'extrémité de l'ouverture (42).

2. Dispositif d'obturation (50) qui se déplace conjointement avec un déplacement d'une unité mobile dans une direction prédéterminée, comprenant :
un premier obturateur (51) qui se déplace dans la direction prédéterminée conjointement avec un déplacement de l'unité mobile pour recouvrir une partie d'une ouverture (42) ; et
un second obturateur (52) agencé entre une extrémité de l'ouverture (42) et le premier obturateur (51) pour s'étendre et se contracter dans la direction prédéterminée conjointement avec un déplacement de l'unité mobile,
dans lequel le second obturateur (52) comprend une pluralité de plaques d'obturation (53) se chevauchant les unes les autres, chacune d'elles ayant une première plaque (54) dont une direction longitudinale est le long de la direction prédéterminée et une seconde plaque (55) dont une direction longitudinale est le long d'une direction perpendiculaire à la première plaque (54),
le dispositif d'obturation (50) étant **caractérisé en ce que**
la seconde plaque (55) des plaques d'obturation (53) du second obturateur (52) est dotée d'une unité de couplage (58) qui couple les plaques d'obturation en chevauchement (53) de telle manière qu'elles peuvent se déplacer dans la direction prédéterminée les unes relativement aux autres,
dans lequel l'unité de couplage (58) est formée dans une portion d'extrémité (551) de la seconde plaque (55) opposée à l'autre portion d'extrémité de celle-ci connectée à la première plaque (54).

3. Dispositif d'obturation (50) selon la revendication 2, dans lequel l'autre portion d'extrémité de la seconde plaque (55) est plus étroite que la portion d'extrémité (551) où l'unité de couplage (58) est formée en largeur dans la direction prédéterminée.

4. Dispositif d'obturation (50) selon l'une quelconque des revendications 1 à 3, dans lequel l'unité de couplage (58) comprend une seconde projection (59) en projection depuis l'une des plaques d'obturation en chevauchement (53) jusqu'à l'autre et un trou (60) formé dans l'autre plaque d'obturation (53) recevant la seconde projection (59), et le trou (60) est plus long que la seconde projection (59) en largeur dans la direction prédéterminée.

5. Machine-outil dotée du dispositif d'obturation (50) selon l'une quelconque des revendications 1 à 4.
